# NEUE EUROPÄISCHE PATENTSCHRIFT

(11) **EP 3 437 745 B2**
(45) Veröffentlichungstag und Bekanntmachung des Hinweises auf die Entscheidung über den Einspruch: **28.01.2026**
(45) Hinweis auf die Patenterteilung: 01.09.2021
(21) Anmeldenummer: 18183893.9
(22) Anmeldetag: 17.07.2018
(51) Int. Cl.: B07C 5/38, B65G 1/137, B07C 5/34

(54) **MATRIXSORTER**
MATRIX SORTER
TRIEUR MATRICIEL

(30) Priorität: 04.08.2017 DE 102017117713
(43) Veröffentlichungstag der Anmeldung: 06.02.2019
(73) Patentinhaber: Vanderlande Industries B.V., 5466 RB Veghel (NL)
(72) Erfinder: Schneuing, Ralf Ferdinand, 33649 Bielefeld (DE); Dau, Andreas, 22941 Bargteheide (DE)
(74) Vertreter: Hoffmann Eitle

(56) Entgegenhaltungen:
- EP-A1- 0 516 970
- DE-A1- 102013 206 240
- DE-B3- 102011 104 511
- DE-C1- 10 039 394
- DE-C1- 4 335 637
- US-A- 5 058 750
- US-A- 6 050 421
- US-A1- 2015 151 913

## Beschreibung

### TECHNISCHES GEBIET

Die vorliegende Erfindung betrifft eine Vorrichtung und ein Verfahren zum Sortieren mehrerer verschiedener Objekte. Die Vorrichtung umfasst zumindest eine erste Sortierstufe mit zumindest zwei Sortierlinien mit jeweils einem Eingangsende und einem Ausgangsende. Die Eingangsenden der Sortierlinien der ersten Sortierstufe sind dabei mit einer Zuführbahn zum Zuführen der Objekte verbunden und die Ausgangsenden der Sortierlinien der ersten Sortierstufe sind mit einer ersten Transportbahn zum Weiterführen der Objekte verbunden.

### STAND DER TECHNIK

In einem Versandzentrum eines Onlinehändlers oder ähnlichen Einrichtungen werden große Mengen von Objekten umgeschlagen. Die Objekte werden in großen Lagern vorgehalten und je nach Bestelleingang chargenweise aus den Lagern entnommen und letztlich einer Verpackungsstation zugeführt. Um eine effiziente Handhabung des Lagers zu gewährleisten, werden die Objekte nicht in der Reihenfolge ihrer Bestellung, sondern entsprechend ihrer Anordnung im Lager entnommen. Somit können die zu verschickenden Objekte die Verpackungsstation nicht unmittelbar in der von der Bestellung geforderten Reihenfolge erreichen, sondern müssen zunächst sortiert werden, um anschließend in der von den Kunden gewünschten Zusammenstellung in Pakete oder dergleichen eingepackt und verschickt zu werden.

Die Größe einer Charge von aus dem Lager entnommenen Objekten ergibt sich dabei unter anderem von der Kapazität des Transports aus dem Lager zur Verpackungsstation.

Aus dem Stand der Technik ist es grundsätzlich bekannt, Objekte, beispielsweise Versandware eines Versandunternehmens, automatisiert zu sortieren. Hierfür gibt es verschiedene Verfahren. Ein Sortierverfahren geht beispielsweise aus DE 21 10 390 A1 hervor. Dieses Verfahren eignet sich grundsätzlich auch dazu, in einem Versandzentrum eines Onlinehändlers eingesetzt zu werden.

Die Objekte werden ausgehend von einer aus dem Lager entnommenen Anfangsreihenfolge in einer Charge in eine durch die Bestellungen bestimmte Endreihenfolge gebracht, wobei die Umgruppierung unter Benutzung von Sortierstufen erfolgt. Hierfür werden den Objekten in der gewünschten Endreihenfolge aufsteigende Ordinalzahlen zuordnet und diese Ordinalzahlen in Stellenschreibweise ausdrückt, wobei als Basis für die Stellenschreibweise die Zahl der vorhandenen Sortierstufen benutzt wird. Einzelnen Sortierlinien der Sortierstufen wird dann jeweils eine Ziffer der der Sortierstufe entsprechenden Stelle zugeordnet. Die Objekte werden dann in einem ersten Umgruppierungsschritt entsprechend der Ziffer ihrer niedrigsten Stelle (in die erste Sortierstufe) und dann in je einem weiteren Umgruppierungsschritt - jeweils ausgehend von der bereits erreichten Gruppierung - entsprechend der Ziffer der höheren Stellen in die Sortierlinien der Sortierstufen eingeordnet.

Dieses Verfahren wird in dieser Form bereits in so genannten Matrixsortern verwendet. Es ermöglicht eine vollautomatische und zuverlässige Sortierung der Objekte in jede gewünschte Reihenfolge. Allerdings besteht hierbei noch Verbesserungsbedarf im Hinblick auf die für das Sortieren erforderliche Zeit. Eine zweite Charge von zu sortierenden Objekten kann der ersten Sortierstufe erst zugeführt werden, wenn die erste Charge vollständig aus der ersten Sortierstufe entnommen wurde, um keine Unordnung in die Sortierung zu bringen. Dies führt zu relativ langen Leerzeiten, in denen die Sortieranlage nicht zum Sortieren, sondern nur zum Bewegen der Objekte benutzt wird.

Eine erste Verbesserungsmöglichkeit liegt in der Aufteilung der Sortierlinien jeder Sortierstufe in zwei gleich große Teil-Sortierlinien, indem mittig entlang der Sortierlinie ein Unterbrecher eingefügt wird. Dieser Unterbrecher teilt die Sortierlinien in einen ersten und einen zweiten Teil. Sobald eine Charge vollständig im ersten Teil der Sortierstufe aufgenommen ist, wird der Unterbrecher der Sortierlinien geöffnet und die Objekte rutschen in den zweiten Teil der Sortierlinien und der Unterbrecher schließt sich wieder. Während die Objekte nach und nach aus den Sortierlinien des zweiten Teils ausgeführt und weitertransportiert werden, kann bereits die Einführung der Objekte der nächsten Charge beginnen.

Nachteilig an dieser Lösung ist jedoch zunächst noch immer eine nicht optimale zeitliche Ausnutzung der Anlage, weil das Rutschen der Objekte aus dem ersten Teil in den zweiten Teil beispielsweise etwa 5 Sekunden benötigt und anschließend noch 2 Sekunden sicherheitshalber abgewartet wird, bevor die Objekte der nächsten Charge eingeführt werden.

Zudem besteht in Sortieranlagen im Onlinehandelsbereich das Problem, dass die zu handhabenden Produkte in ihrer Größe stark variieren. Während eine Verpackung eines T-Shirts nur wenige Zentimeter Platz beansprucht, nimmt eine Verpackung von Winterstiefeln regelmäßig 30 bis 50 Zentimeter Platz entlang der Sortierlinie ein. Die Sortierlinie müsste so ausgelegt werden, dass die maximale Anzahl an Objekten pro Sortierlinie (z.B. 10 Objekte) mit der maximalen Ausdehnung (z.B. 50 cm) auf der Sortierlinie Platz finden. Diese Situation ist jedoch sehr selten und führt zu einem erheblichen Platzbedarf. Um hier einen guten Kompromiss zu finden, kann mit der durchschnittlichen Ausdehnung der Objekte kalkuliert werden, wobei in seltenen Fällen manuell in die Sortierung eingegriffen werden muss, wenn nämlich ausnahmsweise viele große Objekte hintereinander auf einer Sortierlinie aufgereiht werden müssen.

Dieses Problem besteht grundsätzlich in jeder Sortierlinie, verdoppelt sich aber im Fall einer Ausführungsform, die einen mittigen Unterbrecher vorsieht.

### DARSTELLUNG DER ERFINDUNG

Vor dem Hintergrund des bekannten Stands der Technik besteht eine Aufgabe der vorliegenden Erfindung darin, eine Vorrichtung des obigen technischen Gebiets und ein entsprechendes Verfahren bereitzustellen, die bzw. das eine effizientere Nutzung erlaubt. Die effizientere Nutzung bezieht sich vorzugsweise auf eine Zeitersparnis bei der Bearbeitung der einzelnen Objekte und/oder eine Raumersparnis bei der Auslegung der einzelnen Sortierlinien/Sortierstufen. Beides führt zu niedrigeren Kosten beim Erstellen und Betreiben der Vorrichtung.

Die Lösung dieser Aufgabe wird durch ein Verfahren nach Anspruch 1 gegeben. Vorteilhafte Weiterbildungen der Erfindung ergeben sich aus den Unteransprüchen.

Eine Vorrichtung zum Sortieren mehrerer verschiedener Objekte umfasst zumindest eine erste Sortierstufe mit zumindest zwei Sortierlinien mit jeweils einem Eingangsende und einem Ausgangsende, wobei die Eingangsenden der Sortierlinien der ersten Sortierstufe mit einer Zuführbahn zum Zuführen der Objekte und die Ausgangsenden der Sortierlinien der ersten Sortierstufe mit einer ersten Transportbahn zum Weiterführen der Objekte verbunden sind. An den Ausgangsenden der Sortierlinien ist je ein Unterbrecher angeordnet, der zum einzelnen Herauslassen von Objekten aus der jeweiligen Sortierlinie ausgebildet ist, und an den Ausgangsenden der Sortierlinien ist je eine Einrichtung zum Zählen und/oder Identifizieren der aus der jeweiligen Sortierlinie herausgelassenen Objekte angeordnet.

Durch den Unterbrecher am Ausgangsende der Sortierlinien können die Objekte der Sortierlinie einzeln herausgelassen werden, wobei durch die Einrichtung zum Zählen und/oder Identifizieren sichergestellt werden kann, dass genau die Objekte in der Sortierlinie, die zu einer definierten Charge gehören, herausgelassen werden. Solche Objekte, die nicht zu der definierten Charge, sondern der nachfolgended Charge gehören, werden vom Unterbrecher nicht herausgelassen, bevor die Sortierlinie vollständig mit Objekten der betreffenden Charge gefüllt ist . Die Einrichtung zum Zählen zählt die Objekte dabei typischerweise physisch (durch Kontakt, Lichtschranke, Näherungssensor, Kamera etc.). Sie stellet also nur die Anwesenheit eines Objekts fest und zählt es. Die Einrichtung zum Identifizieren stellt demgegenüber fest, welches Objekt vorliegt (durch NFC-Leser, RFID-Leser, Strichcodeleser, Kamera, etc.). Die Nutzung sowohl einer Einrichtung zum Zählen als auch einer Einrichtung zum Identifizieren erhöht die Zuverlässigkeit der Vorrichtung. Denn auf diese Weise kann ein Fehler einer der beiden Einrichtungen durch die zweite Einrichtung erkannt werden und der Betrieb der Vorrichtung muss nicht eingestellt werden. Beispielweise kann dies bedeutend sein, wenn ein RFID-Chip in einem Objekt defekt ist. Der RFID-Leser würde in diesem Fall keine Information liefern, die Zähleinrichtung würde aber physisch feststellen, dass ein Objekt vorhanden ist. Anhand der (sortierten) Reihenfolge oder der Informationen über die übrigen Objekte der Sortierlinie kann dann auf die Identität des Objekts geschlossen werden.

Auf diese Weise kann auf den mittigen Unterbrecher verzichtet werden, weil die Objekte einer der ersten Charge nachfolgenden Charge im unmittelbaren Anschluss an die erste Charge in die Sortierlinien der Sortierstufe eingeführt werden können und trotzdem nicht zusammen mit der ersten Charge herausgelassen werden.

Dies erlaubt sowohl eine zeitlich effizientere Nutzung der Sortierstufe, weil das Rutschen der Objekte aus dem ersten Teil in den zweiten Teil nicht erforderlich ist (genauer gesagt: weil die nachfolgenden Objekte nicht warten müssen, bis die Objekte der ersten Charge in den zweiten Teil der Sortierlinie gerutscht und der mittige Unterbrecher geschlossen sind), als auch eine räumlich effizientere Nutzung der Sortierstufe, weil nur einmal mit der maximalen Ausdehnung und Anzahl an Objekten je Sortierlinie gerechnet werden muss, um eine sichere Aufnahme der Objekte in die Sortierlinie zu erreichen.

Somit wird eine Sortiervorrichtung geschaffen, die eine effizientere Nutzung sowohl in Bezug auf eine Zeitersparnis als auch eine Raumersparnis als im Stand der Technik erlaubt. Die erfindungsgemäße Vorrichtung ermöglicht also niedrigere Kosten bei ihrer Erstellung und ihrem Betrieb.

Die Vorrichtung umfasst zumindest eine zweite Sortierstufe mit zumindest zwei Sortierlinien mit jeweils einem Eingangsende und einem Ausgangsende, wobei die Ausgangsenden der Sortierlinien der ersten Sortierstufe über die erste Transportbahn mit den Eingangsenden der Sortierlinien der zweiten Sortierstufe verbunden sind, so dass Objekte aus einer beliebigen der Sortierlinien der ersten Sortierstufe in eine beliebige der Sortierlinien der zweiten Sortierstufe überführbar sind, und die Ausgangsenden der Sortierlinien der zweiten Sortierstufe mit einer zweiten Transportbahn zum Weiterführen der Objekte verbunden sind. Weiter vorzugsweise umfasst die Vorrichtung ferner zumindest eine dritte Sortierstufe mit zumindest zwei Sortierlinien mit jeweils einem Eingangsende und einem Ausgangsende, wobei die Ausgangsenden der Sortierlinien der zweiten Sortierstufe über die zweite Transportbahn mit den Eingangsenden der Sortierlinien der dritten Sortierstufe verbunden sind, so dass Objekte aus einer beliebigen der Sortierlinien der zweiten Sortierstufe in eine beliebige der Sortierlinien der dritten Sortierstufe überführbar sind, und die Ausgangsenden der Sortierlinien der dritten Sortierstufe mit einer dritten Transportbahn zum Weiterführen der Objekte verbunden sind.

Durch den Einsatz mehrerer Sortierstufen können mehr verschiedene Objekte pro Charge auf einem begrenzten Raum sortiert werden. Die dieser Aussage zugrunde liegenden mathematischen Zusammenhänge sind grundsätzlich bekannt. Eine Vorrichtung mit zwei Sortierstufen, die jeweils zehn Sortierlinien aufweisen, kann 10*10, also 100 Objekte sortieren, wobei hierfür 2*10, also 20 Sortierlinien erforderlich sind. Eine Vorrichtung mit nur vier weiteren Sortierlinien, die in drei Sortierstufen mit jeweils acht Sortierlinien aufgeteilt ist, kann 8*8*8, also 512 Objekte sortieren, ist also erheblich effizienter als die zweistufige Sortiervorrichtung. Die Anzahl an Sortierstufen bestimmt (bei gleich aufgebauten, d.h. mit der gleichen Anzahl an Sortierlinien ausgestatteten, Sortierstufen) die Potenz, während die Anzahl an Sortierlinien pro Sortierstufe die Basis bestimmt. Es ist also aus Raumeffizienzgründen vorteilhaft, mehrere Sortierstufen zu nutzen.

In bevorzugten Ausführungsformen der Vorrichtung weist jede Sortierstufe fünf, sechs, acht oder zehn Sortierlinien auf. Eine Vorrichtung mit drei Sortierstufen mit je sechs Sortierlinien hat sich insgesamt als für die meisten Einsatzfälle besonders effizient erwiesen und wird daher besonders bevorzugt. Dabei ist für die Wahl der jeweiligen Anzahlen an Sortierstufen und der Sortierlinien pro Sortierstufe maßgeblich, in welcher Größenordnung eine übliche Charge an zu sortierenden Objekten ist. Bei größeren Chargen lohnen sich mehrstufige Vorrichtungen eher als bei kleineren Chargen.

Mit Vorteil ist die Vorrichtung dazu ausgebildet, die Objekte hängend, insbesondere in einer an einem Bügel hängenden Tasche, in den Sortierlinien und über die Transportbahn zu fördern. Solche Vorrichtungen sind besonders flexibel einsetzbar und eignen sich sowohl für das Sortieren von auf Bügeln transportierter Kleidung als auch von Objekten, die in Transporttaschen passen. Solche Behältnisse sind im Bereich der Förderanlagen und Sortieranlagen grundsätzlich bekannt und die vorliegende Erfindung eignet sich grundsätzlich auch für den Einsatz in Vorrichtungen, die Objekte liegend oder anders transportieren. Eine die Objekte hängend transportierende Vorrichtung hat sich aber in der Praxis neben seiner Flexibilität als besonders raumeffizient erwiesen.

Bevorzugt ist die Vorrichtung dazu ausgebildet, verschieden große Objekte zu sortieren. Bei solchen Vorrichtungen besteht das Problem der passenden und trotzdem effizienten Dimensionierung der Gesamtvorrichtung gegenüber einer Vorrichtung, die nur Objekte einer einzigen genormten Größe transportiert und sortiert. Auch bei solchen Vorrichtungen für genormt große Objekte stellt die vorliegende Erfindung aber eine Verbesserung dar, da hier die zeitliche Effizienz der Vorrichtung verbessert werden kann.

Mit Vorteil weist die Einrichtung zum Zählen und/oder Identifizieren der aus der jeweiligen Sortierlinie herausgelassenen Objekte einen RFID Leser auf. Die RFID Technologie hat sich als besonders effizient für den Einsatz in der erfindungsgemäßen Sortiervorrichtung herausgestellt. Es ist jedoch auch möglich, andere Einrichtungen zum Zählen und/oder Identifizieren einzusetzen, von denen einige bereits oben genannt wurden.

Die beschriebene Vorrichtung erlaubt eine gegenüber dem bekannten Stand der Technik effizientere Nutzung. Die effizientere Nutzung bezieht sich in bevorzugten Ausführungsformen sowohl auf eine Zeitersparnis bei der Bearbeitung der einzelnen Objekte als auch eine Raumersparnis bei der Auslegung der einzelnen Sortierlinien/Sortierstufen. Einzelne Ausführungsformen erzielen nur einen dieser Vorteile, andere erzielen beide Vorteile.

Ein erfindungsgemäßes Verfahren zum Sortieren mehrerer Chargen aus mehreren verschiedenen Objekten verwendet eine der vorgenannten Vorrichtungen, vorzugsweise eine bevorzugte Vorrichtung, wie sie oben beschrieben wurde. Das Verfahren umfasst ein Zuführen einer ersten Charge zu der ersten Sortierstufe und Sortieren der mehreren Objekte der ersten Charge in die Sortierlinien der ersten Sortierstufe. Es umfasst ferner ein Weiterführen der ersten Charge aus der ersten Sortierstufe und ein Zuführen einer zweiten Charge zu der ersten Sortierstufe und Sortieren der mehreren Objekte der zweiten Charge in die Sortierlinien der ersten Sortierstufe, bevor die erste Charge vollständig aus der ersten Sortierstufe weitergeführt wurde. Die weiterzuführenden Objekte der ersten Charge werden dabei gezählt und/oder identifiziert und die Unterbrecher lassen auf dieser Grundlage nur die Objekte der ersten Charge heraus, halten aber Objekte der zweiten Charge in der Sortierlinie zurück, bis die zweite Charge vollständig der ersten Sortierstufe zugeführt ist.

Durch dieses Verfahren kann die Vorrichtung besonders effizient genutzt werden.

Ein bevorzugtes Verfahren verwendet eine mehrstufige Vorrichtung, wie sie oben beschrieben ist. Es umfasst ein Weiterführen der ersten Charge aus der zweiten Sortierstufe, ein Zuführen der zweiten Charge zu der zweiten Sortierstufe und Sortieren der mehreren Objekte der zweiten Charge in die Sortierlinien der zweiten Sortierstufe, bevor die erste Charge vollständig aus der zweiten Sortierstufe weitergeführt wurde, und ein Zuführen einer dritten Charge zu der ersten Sortierstufe und Sortieren der mehreren Objekte der dritten Charge in die Sortierlinien der ersten Sortierstufe, bevor die zweite Charge vollständig aus der ersten Sortierstufe weitergeführt und der zweiten Sortierstufe zugeführt wurde.

Die vorliegende Erfindung betrifft mehrstufige Vorrichtungen, in denen gleichzeitig (auf die verschiedenen Stufen verteilt) mehrere Chargen sortiert werden können. Die Erfindung ist hier besonders vorteilhaft, weil die Zeitersparnis und auch die Raumersparnis in jeder Sortierstufe erneut erzielt werden. Die Erfindung lohnt sich also besonders in Vorrichtungen mit mehreren Sortierstufen, obwohl sie auch bereits in Vorrichtungen mit nur einer Sortierstufe vorteilhaft ist.

Das erfindungsgemäße Verfahren und insbesondere die bevorzugte Ausgestaltung des Verfahrens nutzt die Sortiervorrichtung effizienter als aus dem Stand der Technik bekannt ist. Die effizientere Nutzung bezieht sich vorzugsweise auf eine Zeitersparnis bei der Bearbeitung der einzelnen Objekte und/oder eine Raumersparnis bei der Auslegung der einzelnen Sortierlinien/Sortierstufen.

Weitere Merkmale und Vorteile der Erfindung ergeben sich aus der nachfolgenden Figurenbeschreibung und der Gesamtheit der Patentansprüche.

### KURZE FIGURENBESCHREIBUNG

Figur 1 ist eine schematische Darstellung einer Verwendung einer Sortiervorrichtung aus dem Stand der Technik mit drei Sortierstufen und je fünf Sortierlinien.
Figur 2 ist eine der Figur 1 entsprechende schematische Darstellung einer bevorzugten Verwendung einer Sortiervorrichtung mit drei Sortierstufen und je fünf Sortierlinien.

### WEGE ZUR AUSFÜHRUNG DER ERFINDUNG

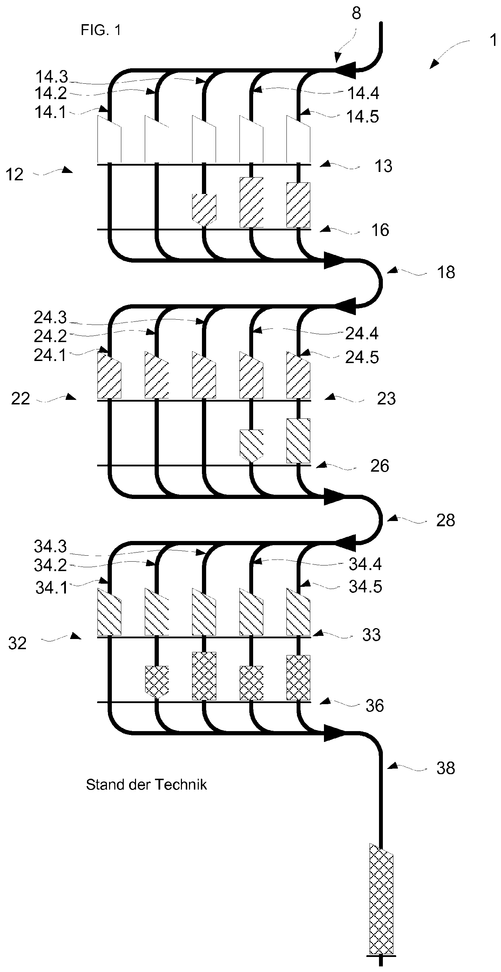

Figur 1 zeigt ein Schema einer Sortiervorrichtung 1 mit drei Sortierstufen 12, 22, 32, die je fünf Sortierlinien 14.1, 14.2, 14.3, 14.4, 14.5, 24.1, 24.2, 24.3, 24.4, 24.5, 34.1, 34.2, 34.3, 34.4, 34.5 aufweisen. Im oberen Bereich befindet sich eine Zuführbahn 8, durch die Objekte der ersten Sortierstufe 12 zugeführt werden und in die Sortierlinien 14.1, 14.2, 14.3, 14.4, 14.5 einsortiert werden.

Mittig entlang der Sortierlinien 14.1, 14.2, 14.3, 14.4, 14.5, 24.1, 24.2, 24.3, 24.4, 24.5, 34.1, 34.2, 34.3, 34.4, 34.5 jeder der Sortierstufen 12, 22, 32 befindet sich bei der aus dem Stand der Technik bekannten Vorrichtung ein erster Unterbrecher 13, 23, 33, der die Sortierlinien 14.1, 14.2, 14.3, 14.4, 14.5, 24.1, 24.2, 24.3, 24.4, 24.5, 34.1, 34.2, 34.3, 34.4, 34.5 jeweils in einen ersten Teil und einen zweiten Teil unterteilt.

Wenn die erste Charge Objekte in die jeweilige Sortierstufe 12, 22, 32 einsortiert ist, befinden sich die Objekte zunächst im ersten (oberen) Teil der Sortierlinien 14.1, 14.2, 14.3, 14.4, 14.5, 24.1, 24.2, 24.3, 24.4, 24.5, 34.1, 34.2, 34.3, 34.4, 34.5. Der erste Unterbrecher 13, 23, 33 wird dann geöffnet und die Objekte rutschen über einen Zeitraum von beispielsweise 5 Sekunden aus dem ersten Teil in den zweiten Teil der Sortierlinien 14.1, 14.2, 14.3, 14.4, 14.5, 24.1, 24.2, 24.3, 24.4, 24.5, 34.1, 34.2, 34.3, 34.4, 34.5, wo sie von zweiten Unterbrechern 16, 26, 36, nämlich jeweils einem pro Sortierlinie 14.1, 14.2, 14.3, 14.4, 14.5, 24.1, 24.2, 24.3, 24.4, 24.5, 34.1, 34.2, 34.3, 34.4, 34.5, am Ausgangsende der Sortierlinien 14.1, 14.2, 14.3, 14.4, 14.5, 24.1, 24.2, 24.3, 24.4, 24.5, 34.1, 34.2, 34.3, 34.4, 34.5 aufgehalten werden. Nach der vorbestimmten Zeit von 5 Sekunden wird der erste Unterbrecher 13, 23, 33 noch 2 Sekunden geöffnet gehalten, um sicherzustellen, dass sich kein Objekt der ersten Charge mehr in einem der ersten Teile der Sortierlinien 14.1, 14.2, 14.3, 14.4, 14.5, 24.1, 24.2, 24.3, 24.4, 24.5, 34.1, 34.2, 34.3, 34.4, 34.5 befindet.

Wenn der Unterbrecher 13 der ersten Sortierstufe 12 wieder geschlossen ist, kann die zweite Charge in den ersten Teil der ersten Sortierstufe 12 einsortiert werden, während die Objekte der zweiten Charge über eine Transportbahn 18 aus der ersten Sortierstufe 12 in die zweite Sortierstufe 22 überführt und dort einsortiert werden. Das Überführen aus der ersten Sortierstufe 12 in die zweite Sortierstufe 22 erfolgt durch Öffnen der zweiten Unterbrecher 16 in einer Folge gemäß der Anordnung der Sortierlinien 14.1, 14.2, 14.3, 14.4, 14.5 der ersten Sortierstufe 12. Dabei werden die zweiten Unterbrecher 16 einmal geöffnet, bis die Objekte der jeweiligen Sortierlinie 14.1, 14.2, 14.3, 14.4, 14.5 diese verlassen haben. Beispielsweise wird erst der zweite Unterbrecher 16 der ersten Sortierlinie 14.1 geöffnet, bis die Objekte dieser Sortierlinie 14.1 diese verlassen haben. Dann wird der zweite Unterbrecher 16 wieder geschlossen und parallel dazu, kurz davor oder danach der zweite Unterbrecher 16 der benachbarten Sortierlinie 14.2 geöffnet und so weiter. Dieses Verfahren wird so lange durchgeführt, bis die Objekte aus dem zweiten Teil der ersten Sortierstufe 12 über die Transportbahn 18 in die zweite Sortierstufe 22 überführt wurden.

Während des Überführens und Einsortierens der Objekte in die zweite Sortierstufe 22, genauer gesagt in die Sortierlinien 24.1, 24.2, 24.3, 24.4, 24.5 der zweiten Sortierstufe 22, wird die zweite Charge in die erste Sortierstufe 12 einsortiert, so dass es durch den Unterbrecher 13, 23, 33 möglich ist, die Sortierstufen 12, 22, 32 effizienter zu nutzen, als wenn abgewartet werden müsste, bis die erste Charge nicht nur vollständig einsortiert und aus dem ersten Teil in den zweiten Teil überführt wurde, sondern auch noch die jeweilige Sortierstufe 12, 22, 32 vollständig verlassen hat (was sortierlinienweise nacheinander, nicht gleichzeitig wie beim Rutschen aus dem jeweils ersten Teil in den zweiten Teil der Sortierlinien, erfolgt).

Dieser Prozess wird grundsätzlich für jede Sortierstufe 12, 22, 32 durchgeführt und diesbezüglich auf die Beschreibung der Verwendung der ersten Sortierstufe 12 verwiesen. Die zweite Sortierstufe 22 weist ebenfalls fünf Sortierlinien 24.1, 24.2, 24.3, 24.4, 24.5, einen ersten Unterbrecher 23 und zweite Unterbrecher 26 auf und ist über eine zweite Transportbahn 28 mit der dritten Sortierstufe 32 verbunden. Auch die dritte Sortierstufe 32 weist fünf Sortierlinien 34.1, 34.2, 34.3, 34.4, 34.5, einen ersten Unterbrecher 33 und zweite Unterbrecher 36 auf und über eine dritte Transportbahn 38 werden die Objekte aus der dritten Sortierstufe 32 weitergeführt, in der hier gezeigte Ausführungsform zur Verpackungsstation.

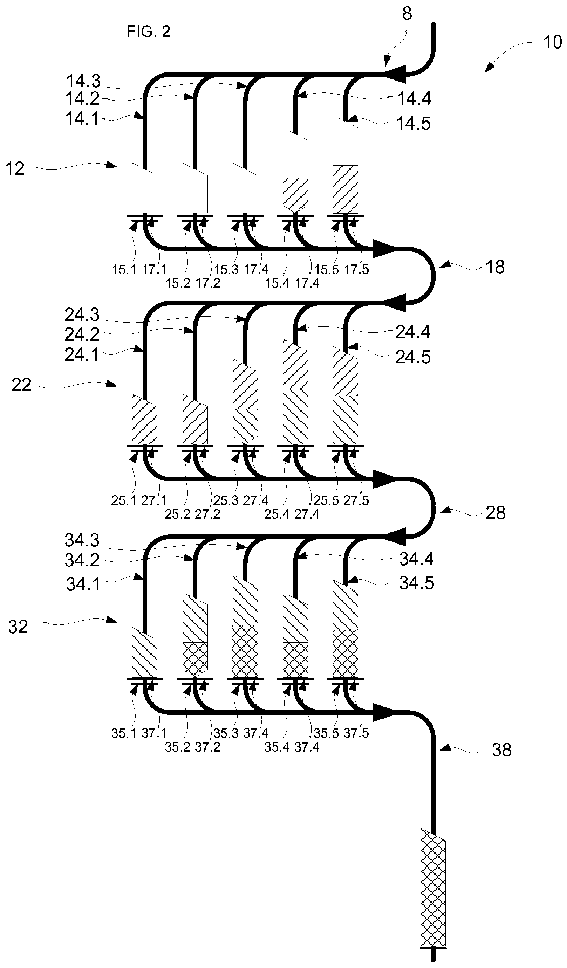

Die in den Figuren 1 und 2 gezeigten Chargen von Objekten sind nach der Logik dargestellt, dass die Objekte auf einer Sortierlinie, die gerade in Ruhe sind, als Rechtecke dargestellt sind, die Objekte auf einer Sortierlinie, die gerade einsortiert werden, wobei also Objekte in die jeweilige Sortierlinie von einer Stromaufrichtung zugeführt werden, als Viereck mit schräger Oberkante dargestellt sind und die Objekte auf einer Sortierlinie, die gerade überführt werden, wobei also Objekte von der jeweiligen Sortierlinie in eine Stromabrichtung weitergeführt werden, als Fünfeck mit spitzer Unterseite dargestellt sind. Unterschiedliche Chargen werden dabei durch unterschiedliche Schraffuren differenziert.

Figur 2 zeigt eine bevorzugte Vorrichtung 10, die derjenigen aus Figur 1 vom Grundaufbau her gleicht. Auch hier sind drei Sortierstufen 12, 22, 32 vorgesehen, die jeweils fünf Sortierlinien 14.1, 14.2, 14.3, 14.4, 14.5, 24.1, 24.2, 24.3, 24.4, 24.5, 34.1, 34.2, 34.3, 34.4, 34.5 aufweisen und ist mit einer ersten Transportbahn 18, einer zweiten Transportbahn 28 und einer dritten Transportbahn 38 versehen. Gleiche Elemente werden der Einfachheit halber mit denselben Bezugszeichen versehen.

Über die aus Figur 1 bekannte Vorrichtung 1 hinaus weist die bevorzugte Vorrichtung 10 in jeder der Sortierstufen 12, 22, 32 an den Ausgangsenden der Sortierlinien 14.1, 14.2, 14.3, 14.4, 14.5, 24.1, 24.2, 24.3, 24.4, 24.5, 34.1, 34.2, 34.3, 34.4, 34.5 je einen Unterbrecher 15.1, 15.2, 15.3, 15.4, 15.5, 25.1, 25.2, 25.3, 25.4, 25.5, 35.1, 35.2, 35.3, 35.4, 35.5 zum einzelnen Herauslassen von Objekten aus der jeweiligen Sortierlinie 14.1, 14.2, 14.3, 14.4, 14.5, 24.1, 24.2, 24.3, 24.4, 24.5, 34.1, 34.2, 34.3, 34.4, 34.5 und eine Einrichtung 17.1, 17.2, 17.3, 17.4, 17.5, 27.1, 27.2, 27.3, 27.4, 27.5, 37.1, 37.2, 37.3, 37.4, 37.5 zum Zählen und Identifizieren der aus der jeweiligen Sortierlinie 14.1, 14.2, 14.3, 14.4, 14.5, 24.1, 24.2, 24.3, 24.4, 24.5, 34.1, 34.2, 34.3, 34.4, 34.5 herausgelassenen Objekte auf.

Durch den Unterbrecher 15.1, 15.2, 15.3, 15.4, 15.5, 25.1, 25.2, 25.3, 25.4, 25.5, 35.1, 35.2, 35.3, 35.4, 35.5 und die Einrichtung 17.1, 17.2, 17.3, 17.4, 17.5, 27.1, 27.2, 27.3, 27.4, 27.5, 37.1, 37.2, 37.3, 37.4, 37.5 zum Zählen und Identifizieren ist es möglich, die Vorrichtung 10 effizienter zu nutzen.

Es kann nun eine erste Charge wie aus dem Stand der Technik in die jeweilige Sortierstufe 12, 22, 32 einsortiert werden. Nachdem die erste Charge aufgenommen wurde, muss aber nicht abgewartet werden, bis die Objekte der Charge auf der jeweiligen Sortierlinie 14.1, 14.2, 14.3, 14.4, 14.5, 24.1, 24.2, 24.3, 24.4, 24.5, 34.1, 34.2, 34.3, 34.4, 34.5 aus einem ersten Teil in einen zweiten Teil gerutscht sind, sondern die zweite oder allgemein nächste Charge kann direkt im Anschluss in dieselbe Sortierstufe 12, 22, 32 einsortiert werden und gleichzeitig die erste oder allgemein vorhergehende Charge aus der jeweiligen Sortierstufe 12, 22, 32 herausgeführt werden.

Denn der Unterbrecher 15.1, 15.2, 15.3, 15.4, 15.5, 25.1, 25.2, 25.3, 25.4, 25.5, 35.1, 35.2, 35.3, 35.4, 35.5 ermöglicht ein einzelnes Herauslassen der Objekte aus den jeweiligen Sortierstufen 12, 22, 32 und die Einrichtung 17.1, 17.2, 17.3, 17.4, 17.5, 27.1, 27.2, 27.3, 27.4, 27.5, 37.1, 37.2, 37.3, 37.4, 37.5 ermöglicht es, den Überblick und die Kontrolle darüber zu behalten, dass nur die Objekte der ersten (vorhergehenden) Charge herausgelassen werden.

Die Objekte verlassen die Sortierlinien 14.1, 14.2, 14.3, 14.4, 14.5, 24.1, 24.2, 24.3, 24.4, 24.5, 34.1, 34.2, 34.3, 34.4, 34.5 also nicht blockweise wie im Stand der Technik, sondern kontinuierlich, während bereits - ebenfalls kontinuierlich - die Objekte der nächsten Charge einsortiert werden. Wegen des Unterbrechers 15.1, 15.2, 15.3, 15.4, 15.5, 25.1, 25.2, 25.3, 25.4, 25.5, 35.1, 35.2, 35.3, 35.4, 35.5 und der Einrichtung 17.1, 17.2, 17.3, 17.4, 17.5, 27.1, 27.2, 27.3, 27.4, 27.5, 37.1, 37.2, 37.3, 37.4, 37.5 entfällt die Notwendigkeit eines mittig angeordneten Unterbrechers wie im Stand der Technik, so dass die einzelnen Sortierlinien 14.1, 14.2, 14.3, 14.4, 14.5, 24.1, 24.2, 24.3, 24.4, 24.5, 34.1, 34.2, 34.3, 34.4, 34.5 nur die Hälfte der Länge der Sortierlinien 14.1, 14.2, 14.3, 14.4, 14.5, 24.1, 24.2, 24.3, 24.4, 24.5, 34.1, 34.2, 34.3, 34.4, 34.5 aus dem Stand der Technik erfordern, um dieselbe Kapazität aufzuweisen, bzw. bei gleicher Länge eine doppelte Kapazität haben.

## Patentansprüche

1. Verfahren zum Sortieren mehrerer Chargen aus mehreren verschiedenen Objekten unter Verwendung einer Vorrichtung (10) zum Sortieren mehrerer verschiedener Objekte, wobei die Vorrichtung umfasst:
zumindest eine erste Sortierstufe (12) mit zumindest zwei Sortierlinien (14.1, 14.2, 14.3, 14.4, 14.5) mit jeweils einem Eingangsende und einem Ausgangsende,
wobei die Eingangsenden der Sortierlinien (14.1, 14.2, 14.3, 14.4, 14.5) der ersten Sortierstufe (12) mit einer Zuführbahn (8) zum Zuführen der Objekte verbunden sind und die Ausgangsenden der Sortierlinien (14.1, 14.2, 14.3, 14.4, 14.5) der ersten Sortierstufe (12) mit einer ersten Transportbahn (18) zum Weiterführen der Objekte verbunden sind,
an den Ausgangsenden der Sortierlinien (14.1, 14.2, 14.3, 14.4, 14.5) je ein Unterbrecher (15.1, 15.2, 15.3, 15.4, 15.5) angeordnet ist, der zum einzelnen Herauslassen von Objekten aus der jeweiligen Sortierlinie (14.1, 14.2, 14.3, 14.4, 14.5) ausgebildet ist, und
an den Ausgangsenden der Sortierlinien (14.1, 14.2, 14.3, 14.4, 14.5) je eine Einrichtung (17.1, 17.2, 17.3, 17.4, 17.5) zum Zählen und/oder Identifizieren der aus der jeweiligen Sortierlinie (14.1, 14.2, 14.3, 14.4, 14.5) herausgelassenen Objekte angeordnet ist,
ferner umfassend zumindest eine zweite Sortierstufe (22) mit zumindest zwei Sortierlinien (24.1, 24.2, 24.3, 24.4, 24.5) mit jeweils einem Eingangsende und einem Ausgangsende,
wobei die Ausgangsenden der Sortierlinien (14.1, 14.2, 14.3, 14.4, 14.5) der ersten Sortierstufe (12) über die erste Transportbahn (18) mit den Eingangsenden der Sortierlinien (24.1, 24.2, 24.3, 24.4, 24.5) der zweiten Sortierstufe (22) verbunden sind, so dass Objekte aus einer beliebigen der Sortierlinien (14.1, 14.2, 14.3, 14.4, 14.5) der ersten Sortierstufe (12) in eine beliebige der Sortierlinien (24.1, 24.2, 24.3, 24.4, 24.5) der zweiten Sortierstufe (22) überführbar sind, und die Ausgangsenden der Sortierlinien (24.1, 24.2, 24.3, 24.4, 24.5) der zweiten Sortierstufe (22) mit einer zweiten Transportbahn (28) zum Weiterführen der Objekte verbunden sind, wobei
an den Ausgangsenden der Sortierlinien (24.1, 24.2, 24.3, 24.4, 24.5) je ein Unterbrecher (25.1, 25.2, 25.3, 25.4, 25.5) angeordnet ist, der zum einzelnen Herauslassen von Objekten aus der jeweiligen Sortierlinie (24.1, 24.2, 24.3, 24.4, 24.5) ausgebildet ist, und
an den Ausgangsenden der Sortierlinien (24.1, 24.2, 24.3, 24.4, 24.5) je eine Einrichtung (27.1, 27.2, 27.3, 27.4, 27.5) zum Zählen und/oder Identifizieren der aus der jeweiligen Sortierlinie (24.1, 24.2, 24.3, 24.4, 24.5) herausgelassenen Objekte angeordnet ist, wobei
das Verfahren umfasst:
Zuführen einer ersten Charge zu der ersten Sortierstufe (12) und Sortieren der mehreren Objekte der ersten Charge in die Sortierlinien (14.1, 14.2, 14.3, 14.4, 14.5) der ersten Sortierstufe (12),
Weiterführen der ersten Charge aus der ersten Sortierstufe (12),
Zuführen einer zweiten Charge zu der ersten Sortierstufe (12) und Sortieren der mehreren Objekte der zweiten Charge in die Sortierlinien (14.1, 14.2, 14.3, 14.4, 14.5) der ersten Sortierstufe (12), bevor die erste Charge vollständig aus der ersten Sortierstufe (12) weitergeführt wurde,
wobei die weiterzuführenden Objekte der ersten Charge gezählt und/oder identifiziert werden und die Unterbrecher auf dieser Grundlage nur die Objekte der ersten Charge herauslassen, aber Objekte der zweiten Charge in der Sortierlinie (14.1, 14.2, 14.3, 14.4, 14.5) halten, bis die zweite Charge vollständig der ersten Sortierstufe (12) zugeführt ist.

2. Verfahren nach Anspruch 1, wobei die verwendete Vorrichtung (10) ferner umfasst:
zumindest eine dritte Sortierstufe (32) mit zumindest zwei Sortierlinien (34.1, 34.2, 34.3, 34.4, 34.5) mit jeweils einem Eingangsende und einem Ausgangsende,
wobei die Ausgangsenden der Sortierlinien (24.1, 24.2, 24.3, 24.4, 24.5) der zweiten Sortierstufe (22) über die zweite Transportbahn (28) mit den Eingangsenden der Sortierlinien (34.1, 34.2, 34.3, 34.4, 34.5) der dritten Sortierstufe (32) verbunden sind, so dass Objekte aus einer beliebigen der Sortierlinien (24.1, 24.2, 24.3, 24.4, 24.5) der zweiten Sortierstufe (22) in eine beliebige der Sortierlinien (34.1, 34.2, 34.3, 34.4, 34.5) der dritten Sortierstufe (32) überführbar sind, und die Ausgangsenden der Sortierlinien (34.1, 34.2, 34.3, 34.4, 34.5) der dritten Sortierstufe (32) mit einer dritten Transportbahn (38) zum Weiterführen der Objekte verbunden sind.

3. Verfahren nach Anspruch 1 oder 2, wobei jede Sortierstufe (12, 22, 32) fünf, sechs, acht oder zehn Sortierlinien (14.1, 14.2, 14.3, 14.4, 14.5, 24.1, 24.2, 24.3, 24.4, 24.5, 34.1, 34.2, 34.3, 34.4, 34.5) aufweist.

4. Verfahren nach einem der vorhergehenden Ansprüche, wobei die verwendete Vorrichtung (10) dazu ausgebildet ist, die Objekte hängend, insbesondere in einer an einem Bügel hängenden Tasche, in den Sortierlinien (14.1, 14.2, 14.3, 14.4, 14.5, 24.1, 24.2, 24.3, 24.4, 24.5, 34.1, 34.2, 34.3, 34.4, 34.5) und über die Transportbahn (18, 28, 38) zu fördern.

5. Verfahren nach einem der vorhergehenden Ansprüche, wobei die Vorrichtung (10) dazu ausgebildet ist, verschieden große Objekte zu sortieren.

6. Verfahren nach einem der vorhergehenden Ansprüche, wobei die Einrichtung (17.1, 17.2, 17.3, 17.4, 17.5) zum Zählen und Identifizieren der aus der jeweiligen Sortierlinie herausgelassenen Objekte einen RFID Leser aufweist.

7. Verfahren nach einem der Ansprüche 2, 3 oder 4 bis 6 in Abhängigkeit von Anspruch 2 oder 3, wobei das Verfahren ferner umfasst:
Weiterführen der ersten Charge aus der zweiten Sortierstufe (22),
Zuführen der zweiten Charge zu der zweiten Sortierstufe (22) und Sortieren der mehreren Objekte der zweiten Charge in die Sortierlinien (24.1, 24.2, 24.3, 24.4, 24.5) der zweiten Sortierstufe (22), bevor die erste Charge vollständig aus der zweiten Sortierstufe (22) weitergeführt wurde, und
Zuführen einer dritten Charge zu der ersten Sortierstufe (12) und Sortieren der mehreren Objekte der dritten Charge in die Sortierlinien (14.1, 14.2, 14.3, 14.4, 14.5) der ersten Sortierstufe (12), bevor die zweite Charge vollständig aus der ersten Sortierstufe (12) weitergeführt und der zweiten Sortierstufe (22) zugeführt wurde.

## Claims

1. Method for sorting multiple batches of several different objects using a device (10) for sorting several different objects, the device comprising:
at least one first sorting stage (12) with at least two sorting lines (14.1, 14.2, 14.3, 14.4, 14.5), each with an input end and an output end,
wherein the input ends of the sorting lines (14.1, 14.2, 14.3, 14.4, 14.5) of the first sorting stage (12) are connected to a feed conveyor (8) for feeding the objects and the output ends of the sorting lines (14.1, 14.2, 14.3, 14.4, 14.5) of the first sorting stage (12) are connected to a first conveyor belt (18) to convey the objects onwards,
an interrupter (15.1, 15.2, 15.3, 15.4, 15.5) is in each case arranged at the output ends of the sorting lines (14.1, 14.2, 14.3, 14.4, 14.5) which is designed to separate individual objects out of the respective sorting line (14.1, 14.2, 14.3, 14.4, 14.5), and
a device (17.1, 17.2, 17.3, 17.4, 17.5) for counting and/or identifying the objects separated out of the respective sorting line (14.1, 14.2, 14.3, 14.4, 14.5) is in each case arranged at the output ends of the sorting lines (14.1, 14.2, 14.3, 14.4, 14.5),
further comprising at least a second sorting stage (22) with at least two sorting lines (24.1, 24.2, 24.3, 24.4, 24.5), each with an input end and an output end,
wherein the output ends of the sorting lines (14.1, 14.2, 14.3, 14.4, 14.5) of the first sorting stage (12) are connected via the first conveyor belt (18) to the input ends of the sorting lines (24.1, 24.2, 24.3, 24.4, 24.5) of the second sorting stage (22), so that objects from any of the sorting lines (14.1, 14.2, 14.3, 14.4, 14.5) of the first sorting stage (12) can be transferred to any of the sorting lines (24.1, 24.2, 24.3, 24.4, 24.5) of the second sorting stage (22), and the output ends of the sorting lines (24.1, 24.2, 24.3, 24.4, 24.5) of the second sorting stage (22) are connected to a second conveyor belt (28) to convey the objects onwards, wherein
an interrupter (25.1, 25.2, 25.3, 25.4, 25.5) is in each case arranged at the output ends of the sorting lines (24.1, 24.2, 24.3, 24.4, 24.5) which is designed to separate individual objects out of the respective sorting line (24.1, 24.2, 24.3, 24.4, 24.5), and
a device (27.1, 27.2, 27.3, 27.4, 27.5) for counting and/or identifying the objects separated out of the respective sorting line (24.1, 24.2, 24.3, 24.4, 24.5) is in each case arranged at the output ends of the sorting lines (24.1, 24.2, 24.3, 24.4, 24.5), wherein
the method comprises:
feeding a first batch to the first sorting stage (12) and sorting the various objects of the first batch into the sorting lines (14.1, 14.2, 14.3, 14.4, 14.5) of the first sorting stage (12),
conveying the first batch onwards from the first sorting stage (12),
feeding a second batch to the first sorting stage (12) and sorting the various objects of the second batch into the sorting lines (14.1, 14.2, 14.3, 14.4, 14.5) of the first sorting stage (12) before the first batch has been completely conveyed onwards from the first sorting stage (12),
wherein the objects of the first batch to be conveyed onwards are counted and/or identified and on this basis the interrupters only let out the objects of the first batch, but hold objects of the second batch in the sorting line (14.1, 14.2, 14.3, 14.4, 14.5) until the second batch has been completely fed to the first sorting stage (12).

2. Method according to claim 1, wherein the device (10) used further comprises:
at least a third sorting stage (32) with at least two sorting lines (34.1, 34.2, 34.3, 34.4, 34.5), each with an input end and an output end,
wherein the output ends of the sorting lines (24.1, 24.2, 24.3, 24.4, 24.5) of the second sorting stage (22) are connected via the second conveyor belt (28) to the input ends of the sorting lines (34.1, 34.2, 34.3, 34.4, 34.5) of the third sorting stage (32), such that objects from any of the sorting lines (24.1, 24.2, 24.3, 24.4, 24.5) of the second sorting stage (22) can be transferred into any of the sorting lines (34.1, 34.2, 34.3, 34.4, 34.5) of the third sorting stage (32), and the output ends of the sorting lines (34.1, 34.2, 34.3, 34.4, 34.5) of the third sorting stage (32) are connected with a third conveyor belt (38) to convey the objects onwards.

3. Method according to claim 1 or 2, wherein each sorting stage (12, 22, 32) has five, six, eight or ten sorting lines (14.1, 14.2, 14.3, 14.4, 14.5, 24.1, 24.2, 24.3, 24.4, 24.5, 34.1, 34.2, 34.3, 34.4, 34.5).

4. Method according to one of the preceding claims, wherein the device (10) used is designed to convey the objects in a hanging manner, in particular in a bag suspended from a hanger, in the sorting lines (14.1, 14.2, 14.3, 14.4, 14.5, 24.1, 24.2, 24.3, 24.4, 24.5, 34.1, 34.2, 34.3, 34.4, 34.5) and via the conveyor belt (18, 28, 38).

5. Method according to one of the preceding claims, wherein the device (10) is designed to sort objects of different sizes.

6. Method according to one of the preceding claims, wherein the device (17.1, 17.2, 17.3, 17.4, 17.5) for counting and identifying the objects let out of the respective sorting line has an RFID reader.

7. Method according to one one of claims 2, 3 or 4 to 6, where dependent on claim 2 or 3, wherein the method further comprises:
conveying the first batch onwards from the second sorting stage (22),
feeding the second batch to the second sorting stage (22) and sorting the various objects of the second batch into the sorting lines (24.1, 24.2, 24.3, 24.4, 24.5) of the second sorting stage (22) before the first batch has been completely conveyed onwards from the second sorting stage (22), and
feeding a third batch to the first sorting stage (12) and sorting the various objects of the third batch into the sorting lines (14.1, 14.2, 14.3, 14.4, 14.5) of the first sorting stage (12) before the second batch has been completely conveyed onwards from the first sorting stage (12) and fed to the second sorting stage (22).

## Revendications

1. Procédé de tri de plusieurs lots composés de plusieurs objets différents à l'aide d'un dispositif de tri (10) de plusieurs objets différents, dans lequel le dispositif comprend :
au moins un premier niveau de tri (12) avec au moins deux lignes de tri (14.1, 14.2, 14.3, 14.4, 14.5) avec chacune une extrémité d'entrée et une extrémité de sortie,
dans lequel les extrémités d'entrée des lignes de tri (14.1, 14.2, 14.3, 14.4, 14.5) du premier niveau de tri (12) sont reliées à un convoyeur d'alimentation (8) pour l'amenée des objets et les extrémités de sortie des lignes de tri (14.1, 14.2, 14.3, 14.4, 14.5) du premier niveau de tri (12) sont reliées à une première bande transporteuse (18) pour poursuivre le déplacement des objets,
aux extrémités de sortie des lignes de tri (14.1, 14.2, 14.3, 14.4, 14.5), est disposé respectivement un interrupteur (15.1, 15.2, 15.3, 15.4, 15.5), qui est réalisé pour faire sortir un à un des objets de la ligne de tri (14.1, 14.2, 14.3, 14.4, 14.5) respective,
aux extrémités de sortie des lignes de tri (14.1, 14.2, 14.3, 14.4, 14.5) est disposé respectivement un système (17.1, 17.2, 17.3, 17.4, 17.5) pour compter et/ou identifier les objets sortis de la ligne de tri (14.1, 14.2, 14.3, 14.4, 14.5) respective,
comprenant en outre au moins un deuxième niveau de tri (22) avec au moins deux lignes de tri (24.1, 24.2, 24.3, 24.4, 24.5) avec chacune une extrémité d'entrée et une extrémité de sortie,
dans lequel les extrémités de sortie des lignes de tri (14.1, 14.2, 14.3, 14.4, 14.5) du premier niveau de tri (12) sont reliées par l'intermédiaire de la première bande transporteuse (18) aux extrémités d'entrée des lignes de tri (24.1, 24.2, 24.3, 24.4, 24.5) du deuxième niveau de tri (22), de sorte que les objets provenant de l'une quelconque des lignes de tri (14.1, 14.2, 14.3, 14.4, 14.5) du premier niveau de tri (12) puissent être transférés dans une quelconque des lignes de tri (24.1, 24.2, 24.3, 24.4, 24.5) du deuxième niveau de tri (22), et les extrémités de sortie des lignes de tri (24.1, 24.2, 24.3, 24.4, 24.5) du deuxième niveau de tri (22) sont reliées à une deuxième bande transporteuse (28) pour poursuivre le déplacement des objets, dans lequel
aux extrémités de sortie des lignes de tri (24.1, 24.2, 24.3, 24.4, 24.5) est disposé respectivement un interrupteur (25.1, 25.2, 25.3, 25.4, 25.5) qui est réalisé pour faire sortir un à un des objets de la ligne de tri (24.1, 24.2, 24.3, 24.4, 24.5) respective, et
aux extrémités de sortie des lignes de tri (24.1, 24.2, 24.3, 24.4, 24.5) est disposé respectivement un système (27.1, 27.2, 27.3, 27.4, 27.5) pour compter et/ou identifier les objets sortis de la ligne de tri (24.1, 24.2, 24.3, 24.4, 24.5) respective, dans lequel
le procédé comprend :
l'amenée d'un premier lot au premier niveau de tri (12) et le tri des plusieurs objets du premier lot dans les lignes de tri (14.1, 14.2, 14.3, 14.4, 14.5) du premier niveau de tri (12),
la poursuite du déplacement du premier lot à partir du premier niveau de tri (12),
l'amenée d'un deuxième lot au premier niveau de tri (12) et le tri des plusieurs objets du deuxième lot dans les lignes de tri (14.1, 14.2, 14.3, 14.4, 14.5) du premier niveau de tri (12) avant que le premier lot ait entièrement poursuivi son déplacement à partir du premier niveau de tri (12),
dans lequel les objets du premier lot devant poursuivre leur déplacement sont comptés et/ou identifiés et les interrupteurs sur cette base ne font sortir que les objets du premier lot, mais maintiennent des objets du deuxième lot dans la ligne de tri (14.1, 14.2, 14.3, 14.4, 14.5) jusqu'à ce que le deuxième lot soit entièrement amené au premier niveau de tri (12).

2. Procédé selon la revendication 1, dans lequel le dispositif (10) utilisé comprend en outre :
au moins un troisième niveau de tri (32) avec au moins deux lignes de tri (34.1, 34.2, 34.3, 34.4, 34.5) avec chacune une extrémité d'entrée et une extrémité de sortie, dans lequel les extrémités de sortie des lignes de tri (24.1, 24.2, 24.3, 24.4, 24.5) du deuxième niveau de tri (22) sont reliées par l'intermédiaire de la deuxième bande transporteuse (28) aux extrémités d'entrée des lignes de tri (34.1, 34.2, 34.3, 34.4, 34.5) du troisième niveau de tri (32),
de sorte que les objets provenant de l'une quelconque des lignes de tri (24.1, 24.2, 24.3, 24.4, 24.5) du deuxième niveau de tri (22) puissent être transférés dans une quelconque des lignes de tri (34.1, 34.2, 34.3, 34.4, 34.5) du troisième niveau de tri (32), et les extrémités de sortie des lignes de tri (34.1, 34.2, 34.3, 34.4, 34.5) du troisième niveau de tri (32) sont reliées à une troisième bande transporteuse (38) pour poursuivre le déplacement des objets.

3. Procédé selon la revendication 1 ou revendication 2, dans lequel chaque niveau de tri (12, 22, 32) présente cinq, six, huit ou dix lignes de tri (14.1, 14.2, 14.3, 14.4, 14.5, 24.1, 24.2, 24.3, 24.4, 24.5, 34.1, 34.2, 34.3, 34.4, 34.5).

4. Procédé selon l'une quelconque des revendications précédentes, dans lequel le dispositif (10) utilisé est réalisé pour suspendre les objets, en particulier dans une poche accrochée à un cintre, dans les lignes de tri (14.1, 14.2, 14.3, 14.4, 14.5, 24.1, 24.2, 24.3, 24.4, 24.5, 34.1, 34.2, 34.3, 34.4, 34.5) et sur la bande transporteuse (18, 28, 38).

5. Procédé selon l'une quelconque des revendications précédentes, dans lequel le dispositif (10) est réalisé pour trier des objets de différentes tailles.

6. Procédé selon l'une quelconque des revendications précédentes, dans lequel le système (17.1, 17.2, 17.3, 17.4, 17.5) pour compter et identifier les objets sortis de la ligne de tri respective présente un lecteur RFID.

7. Procédé selon l'une quelconque des revendications 2, 3 ou 4 à 6 en fonction de la revendication 2 ou revendication 3, dans lequel le procédé comprend en outre :
la poursuite du déplacement du premier lot à partir du deuxième niveau de tri (22),
l'amenée du deuxième lot au deuxième niveau de tri (22) et le tri des plusieurs objets du deuxième lot dans les lignes de tri (24.1, 24.2, 24.3, 24.4, 24.5) du deuxième niveau de tri (22), avant que le premier lot ait entièrement poursuivi son déplacement à partir du deuxième niveau de tri (22), et
l'amenée d'un troisième lot au premier niveau de tri (12) et le tri des plusieurs objets du troisième lot dans les lignes de tri (14.1, 14.2, 14.3, 14.4, 14.5) du premier niveau de tri (12), avant que le deuxième lot ait entièrement poursuivi son déplacement à partir du premier niveau de tri (12) et ait été amené au deuxième niveau de tri (22).
